# EUROPEAN PATENT APPLICATION

(11) **EP 4 559 585 A1**
(43) Date of publication of application: **28.05.2025**
(21) Application number: 23212237.4
(22) Date of filing: 27.11.2023
(51) Int. Cl.: B05C 5/02, B05B 7/14, B05C 11/10, B05C 19/06, H01M 4/04

(54) **SYSTEM AND METHOD FOR EXTRACTING ACTIVE MATERIAL RESIDUE FROM AN ASSEMBLY FOR COATING AN ELECTRODE WITH AN ACTIVE MATERIAL LAYER AND THE CORRESPONDING ASSEMBLY; METHOD FOR MANUFACTURING AN ELECTRODE, ELECTRODE AND BATTERY.**

(71) Applicant: LG Energy Solution, Ltd., Seoul 07335 (KR)
(72) Inventor: LEE, Joon Jae, 34122 Daejeon (KR); YUN, Tae Woong, 34122 Daejeon (KR); LEE, Jong Chan, 34122 Daejeon (KR)
(74) Representative: Goddar, Heinz J.

(57) **Abstract**

A system for extracting active material residue from an assembly for coating an electrode with an active material layer, comprises a mobile tank configured to hold active material residue, a conduit attached to the mobile tank and connectable to the assembly, and a pumping device configured to apply a negative pressure to the mobile tank for sucking active material residue from the assembly through the conduit.

## Description

### Technical Field

The present disclosure relates to a system and a method for extracting active material residue from an assembly for coating an electrode with an active material layer and to a corresponding assembly configured to allow the extraction of active material. The disclosure also relates to a method for manufacturing an electrode in an assembly for coating an electrode with an active material residue, and corresponding electrodes and batteries.

### Technical Background

In modern society, as portable devices such mobile phones, notebook computers, camcorder and digital camera have become popular, the development of battery technology is of great significance. In addition, chargeable/dischargeable secondary batteries have become indispensable power sources for electric vehicles (EV), hybrid electric vehicles (HEV), plug-in hybrid electric vehicles (P-HEV) and the like, in the attempt to solve air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

A secondary battery may be classified based on the shape of battery case into a cylindrical battery having an electrode assembly mounted in a cylindrical metal can, a prismatic battery having an electrode assembly mounted in a prismatic metal can, and a pouch-type battery. The pouch-type secondary battery generally accommodates an electrode assembly having a structure in which electrodes and separators are alternately arranged within a pouch-shaped case made of a laminated aluminum sheet.

Further, the secondary battery may be classified based on the structure in which a cathode and an anode are stacked with a separator being interposed between the cathode and the anode. Typically, there may be a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly. Such a stacked type electrode assembly may also be referred to as an electrode stack assembly.

The electrodes, that is, the cathode and the anode, are typically formed in a process in which metal foil web material is processed into an electrode web (short: electrode) by coating the metal foil web material with an active material layer and subsequently separating individual electrodes from the coated web of metal foil. Production assemblies generally include a large stationary tank configured to hold large amounts of active material for processing, which must be no less than the amount required for coating, so that the stationary tank frequently holds a surplus of active material. When changing the production assembly from coating a first type of electrodes to coating a different, second type of electrodes, for example from positive electrodes to negative electrodes, the active material powder for coating must be changed accordingly. These changes normally occur according to a schedule but sometimes unexpectedly so that the amount of residue varies. When, for example, the coating operation for manufacturing positive electrodes is finished, a rest of positive active material always remains in the assembly. Prior to using the same assembly for another coating operation for a different negative or positive electrode, typically using a different active material, the assembly must be cleaned from residue which could otherwise remain and realize an undesired impurity in subsequent electrode manufacturing. Removing the active electrode material is cumbersome, associated with undesired assembly downtime and, if done incorrectly, may lead to subpar products in subsequent electrode manufacturing.

### DETAILED DESCRIPTION OF THE INVENTION

### Technical Problem

It is an objective of the present disclosure to overcome the disadvantages of the prior art, in particular to improve the assembly and method under economical and/or ecological aspects.

### Technical Solution

One or more problems known from the prior art are solved by the subject-matter according to the independent claims. Particular embodiments are given by the features of the dependent claims.

Accordingly, the present disclosure relates to a system for extracting active material residue, in particular powder residue, from an assembly for coating an electrode with an active material layer. The system comprises a mobile tank, a conduit and a pumping device. It shall be clear that the system may be configured to be releasably attachable to one or more, preferably several, assemblies for coating an electrode with an active material layer. It may be preferred that the system is mobile to be movable from a first assembly for coating an electrode with a first active material, such as a positive electrode active material, to a second assembly for coating another electrode with a second active material, such as a negative electrode active material. The moveable tank may be provided with a carriage. A carriage may include wheels, rolls, skids, or the like, to be moveable between different positions spaced apart in a manufacturing site. The carriage may be moveable on a flat surface, rails, ropes, chains, or the like. The moveable tank may be moveable in a horizontal direction and/or in a vertical direction between between different positions spaced apart in a manufacturing site. The moveable tank may be moveable by manpower. Alternatively or additionally, the moveable tank may be provided with at least one engine and drivetrain configured for moving the mobile tank. The mobile tank is preferably equipped with an electric engine. While the assembly is preferably rigidly attached to a support structure, such as a bulding structure, the mobile tank is moveable in relation to the support structure. The system is preferably configured such that it is attachable to and releasable from a first assembly, a second assembly and possibly further assemblies in a manufacturing site. Preferably, the system according to the present disclosure does not constitute part of an assembly for coating an electrode with an active material during the normal coating operation of the assembly. That is, it may be preferred that the system according to the present disclosure is distinct and separate from an assembly during normal operation of the assembly. The system may in particular be attachable to the assembly for coating an electrode with an active material only after a normal coating operation using the assembly has been interrupted, preferably terminated. More particularly, the system may be configured to be attached to a first assembly after the assembly has terminated its coating operation and to be released from the first assembly before the assembly commences another, normal coating operation, preferably using another active material than before.

The mobile tank is configured to hold active material residue. The conduit is attached to or attachable to the mobile tank and releasably connected or releasably connectable to the assembly. The conduit can be adapted in accordance with the requirements of the assembly or assemblies to which the system is attachable. The form and shape of the conduit can preferably be selected and/or adapted with respect to the system and to the assembly or assemblies with which it interacts. For instance, the length of the conduit can be selected appropriately. The conduit or part thereof may be formed integrally with the mobile tank. In some embodiments, the conduit or part thereof may be realized as a tube, pipe, stub or the like. The conduit can be attached to the mobile tank, preferably be formed integrally with the mobile tank. In one example, a conduit or part thereof may include or consist of a flexible hose. Such a flexible hose can be attachable to the mobile tank or attached thereto. A flexible hose can be releasably connectable or connected to an assembly. In some embodiments, the conduit may comprise a first section formed integrally with the mobile tank, such as a pipe or stub or aperture thereof, and tubing, such as a flexible hose, forming a second section of the conduit.

The mobile tank may have a volume of at least 50 L, in particular at least 100 L, preferably at least 250 L, and/or no more than 2000 L, in particular no more than 1000 L, preferably no more than 750 L. The mobile tank may for example have a volume of approximately 500 L. The mobile tank may for example have a volume of 380 L. In particular, the funnel section may have a volume of 280 L. The mobile tank may be selectively closed or closable in an airtight manner. In particular one or more valves may be selectively closed to shut off the mobile tank, or opened to form a fluid connection between the inside of the mobile tank and the assembly, the pumping device, the storage container or the like. Leakage can be avoided by allowing the mobile tank to be tightly sealed during a pumping action for conveying active material, particularly active material powder residue, from the assembly to the system and for controllably releasing active material residue, in particular active material powder residue, from the mobile tank, preferably to a storage container. A control valve may be provided between the conduit and the mobile tank. It is preferred that the mobile tank comprises a control valve configured to open and/or close the connection between the mobile tank in the assembly to which the system is attachable or attached.

The pumping device of the system is configured for applying a negative pressure to the mobile tank for sucking active material residue from the assembly through the conduit. The pumping device may comprise a pneumatic drive, in particular connected to a pneumatic supply line of the system. The pumping device serves to propel air or another suitable transport medium, wherein the transport medium may be liquid or gaseous, in order to propel the active material residue, particularly active material residue powder, through the conduit. When the system is attached to a first assembly wherein the conduit is on the one hand attached to the mobile tank and on the other hand releasably connected to the first assembly (connected state), the pumping device may be operable to suck active material residue from the assembly. The pumping device may, in the connected state, be configured to convey active material residue from the assembly to the mobile tank.

The term "negative pressure" as used herein, designates a pressure below ambient pressure and/or below the pressure prevalent within the assembly while the system is connected to the assembly. The term "negative pressure" shall be understood in that the pumping device is configured to create a pressure difference between an assembly and the system connected thereto in order to propel transport medium, such as ambient air, nitrogen or the like, together with active material, preferably active material residue powder, through the conduit from the assembly into the mobile tank. The term "negative pressure" shall preferably be understood to relate to a difference between on the one hand the assembly and the other hand, the mobile tank of the system. In other words, the negative pressure shall be understood to refer to a pressure lower than (or negative in relation to) a reference pressure, particularly at an entry of the conduit connectable or connected to the assembly from which the active material residue, particularly powder residue, is to be extracted. A negative pressure can in some instances be referred to as a vacuum pressure. The pumping device may in particular be configured to create a pressure difference between the assembly and the mobile tank of no less than 0.01 MPa, preferably no less than 0.1 MPa, more preferably no less than 0.5 MPa. The pumping device may optionally be configured to create a pressure difference between the assembly and the mobile tank of no more than 10 MPa, in particular no more than 5 MPa, preferably no more than 1 MPa. In some embodiments, the pressure difference may lie between 0.5 MPa and 0.7 MPa, particularly at approximately 0.6 MPa. Additionally, or alternatively, the pumping device may be configured to generate a flow of active material residue through the conduit (preferably determined at the interface of the conduit and the mobile tank) of at least 1 kg/Min, in particular at least 5 kg/Min, preferably at least 10 kg/Min, more preferably at least 25 kg/Min. Additionally or alternatively, the pumping device may be configured to generate a flow of transport medium through the conduit (preferably determined at the interface of the conduit and the mobile tank) of at least 100 NL/Min, in particular at least 1000 NL/Min, preferably at least 2000 NL/Min, more preferably at least 2400 NL/Min. Further additionally or alternatively, the pumping device may be configured to generate a flow of transport medium through the conduit of no more than 10000 NL/Min, in particular no more than 5000 NL/Min, preferably no more than 4000 NL/Min, more preferably no more than 3500 NL/Min. "NL" or normal liter refers to a unit of mass for gases equal to the mass of 1 liter at a pressure of 1 atmosphere (101.325 kPa) and at a standard temperature of 20 °C. In some embodiments, the system may comprise a pumping device creating a relatively higher pressure in the assembly, a pumping device creating a relatively lower pressur in the system, or both.

The system to the according to the present disclosure allows to gather the active material residue, particularly powder residue, from an assembly for coating an electrode web with an active material layer so as to clean the assembly for subsequent operation, preferably using a different active material, and/or to collect the active material residue, in particular powder residue, for future use in the same assembly or a different assembly for coating an active coating an electrode web with an active material layer. By using the system, the assembly may be particularly well prepared for future operation, especially using a different kind of active material which might otherwise be affected by impurities resulting from active material residue. This allows for a fast start of the subsequent coating operation using a second active material different from a different, particularly incompatible with, the first active material which was in the assembly beforehand. When an electrode web coated with a layer of active material contains impurities negatively affecting the performance, the electrode or even a battery containing the election may in some cases not pass quality requirements, which may lead to substandard goods.

The removal or extraction of active material residue from an assembly and collecting the active material residue with the mobile tank lays a basis for possible future use of the active material residue. Conventionally, in electrode manufacturing, active material residue is considered waste material to be discarded. Dispensing active material residue is undesirable for both economical as well as ecological reasons. The system according to the present disclosure allows for a significantly improved economic and ecological footprint of the assembly or assembly for coating an electrode web with an active material layer.

In an embodiment, the pumping device is arranged at the mobile tank. The pumping device may be rigidly attached to the mobile tank. For example, the pumping device may be attached to a lid vertically above the funnel section or, optionally, an optional cylinder section attached thereon.

In some embodiments, the system may further comprise a storage container attachable to and detachable from the mobile tank. In other words, the storage container is releasably attachable to the mobile tank. The storage container is configured to receive and store the active material residue. It is preferred that the storage container is appropriately selected for storing active material residue, preferably active material powder residue. The storage container may preferably be selected for physical and/or a chemical compatibility with the active material residue to be stored therein. The system may comprise multiple storage containers each configured for different types of active material residue. For example, the system may comprise a first storage container corresponding to a first active material, a second storage container for a second active material, and so on. In particular, the storage container may be configured so as not to chemically interact with the active material to be stored therein. Preferably, the storage container comprises or consists of a material chemically inert with respect to the active material to be stored therein. In a preferred embodiment, the storage container is realized by using delivery package material in which the active material residue extracted from the assembly was initially provided as active material to the assembly. Preferably, the storage container is attachable to the lower side of the mobile tank. In particular, the storage container may be disposed vertically below the mobile tank. The storage container may be connected or connectable to the lower side, in particular the bottom, of the mobile tank. The bottom of the mobile tank may at least partially be enveloped by the storage container. The lower side may generally refer to a portion of the mobile tank in the vertically lower half of the mobile tank, in particular in the vertically lower third or lower quarter of the mobile tank. The storage container may attach to the bottom end of the mobile tank or, alternatively, to a section of the storage container in the proximity of the bottom end of the mobile tank, in particular a section extending upward from the bottom end of the mobile tank.

In a preferred embodiment of the system, the mobile tank may comprise a cylindrical section and a funnel section. In particular, the mobile tank comprises at funnel section and/or a discharge valve at the lower side lower sie of the mobile tank. The funnel may realize the bottom of the mobile tank thus forming the lower side of the mobile tank. The cylindrical section may be arranged vertically above the funnel section. It may be preferred that the cylindrical section is shaped complementarily with respect to the wide end of the funnel section. The narroweand of the funnel section may have a diameter at least large as, preferably larger than, the diameter of the conduit and/or of one or more pressure, supply lines used in the system. A pressure supply line may be used for operating the pumping device. For example, the pumping device may have a 1" (2.54 cm) diameter supply line. In a preferred embodiment, the width of the narrow end of the funnel section, in particular, the width of the discharge valve, is between 2" (5 cm) and 20" (50 cm), preferably between 6" (15 cm) to 12" (30 cm), for example 8" (20 cm). The funnel section and/or cylinder section may have a diameter of the wide end of the funnel section between 250 mm and 2500 mm, in particular between 500 mm and 1500 mm, operatively between 1000 mm and 1200 mm.

The funnel section may be provided in order to easily discharge active material residue from the mobile tank, preferably into a storage container. The provision of a discharge valve at the lower side of the mobile tank, in particular on the lower end (narrow end) of the funnel section, may be beneficial for operating the system or method for extracting active material residue.

In some embodiments, the mobile tank comprises a vibrator and/or a flow diger configured to facilitate discharging the active material residue from the mobile tank, in particular to the storage container. It may be preferred that the flow diger and/or the vibrator comprise a respective pneumatic drive, in particular connected to a pneumatic supply line of the system. The vibrator and/or a flow diger for discharging the active material may in particular be provided in a system for extracting active material powder residue from the assembly. The flow diger and/or vibrator may improve the rate at which the active material residue can be discharged from the mobile tank. Thus, the system or method for excavating extracting active material may be operated rapidly and thus particularly efficiently.

In some embodiments that may be combined with the aforementioned ones, the pumping device is a vacuum conveyor including a vacuum pump. The pumping device being a vacuum conveyor may further comprise a filter between the pumping device, in particular the vacuum conveyor, and the mobile tank. The filter may serve to protect the vacuum pump from ingesting active material residue, particularly in powder form. Additionally or alternatively, the system, in particular its pumping device, comprises a dust collector, in particular connected to the exhaust of the pumping device. The dust collector protects the environment from active material powder residue dust. The pumping device comprising vacuum conveyor is preferably attached to the mobile tank so as to be operated to second active material residue from the assembly through the conduit into the mobile tank.

In preferred embodiments of the system according to the present disclosure, which may be combined with the aforementioned ones, the conduit is configured to be directly connectable or connected to a stationary tank, a hopper, a scale, a mixer, and/or to a die coater of the assembly. Preferably, the conduit is configured to be directly connectable or connected to the hopper or a conveyer directly connected to the hopper of the assembly. It may be preferred to remove a mixer and/or a die coater in with active material slurry, including a liquid components such as binder and/or solvents are used in combination with an active material powder, prior to extracting active material powder residue from of the assembly. Furthermore, it may be preferred to remove a scale for measuring and/or dosing active material prior to attaching the system, or at least to seal off the scale another dosage device from the system, prior to operating the system to extracting active material (powder) residue from the assembly, to avoid causing measurement errors of the scale. It may be particularly preferred to configure the system so as to be connected or connectable to a subsystem of the assembly for coating an electrode with an active material layer comprising a stationary tank and/or a hopper for active material (powder) and optionally a conveyor for transporting the active material powder from the tank and/or hopper to the scale and/or mixer, or the like. Through this attachment is possible to minimize the amount of active material (powder) residue which may remain inside of the assembly after an extraction using the system according to the present disclosure. Additionally, using the system and connecting it in such a manner, it is possible you to rapidly and effectively clean the assembly from active material residue prior to initiating a subsequent coating operation with the assembly, using another active material.

The present disclosure also relates to assembly for coating an electrode with an active material layer. The assembly comprises a stationary tank, a die coater, and a conveyor. The assembly may comprise further assembly components, preferably stationary assembly components. The stationary tank may be rigidly attached to a holding structure, such as a building structure. It is preferred that the die coater and/or the conveyor are rigidly attached to a holding structure, such as a building structure. The stationary tank is configured to store a supply of active material for processing in the assembly. The stationary tank may have a volume of at least 500 L, in particular at least 1000 L, preferably at least 2500 L, and/or no more than 100000 L, in particular no more than 50000 L, preferably no more than 20000 L. A system, such as described above, for extracting active material residue from the assembly may be attachable or attachd to the assembly, and in such a case it may be preferred that the mobile tank of the extraction system is no larger than the stationary tank of the coating assembly, and more preferably, the mobile tank may have a volume smaller than that of the stationary tank, in particular less than half as big as the volume of the stationary tank. The die coater is configured to supply the active material onto metal foil web material for forming the active material layer. The stationary tank may be arranged vertically above the die coater. The stationary tank is preferably immobile. The conveyor is configured to transfer the active material from the stationary tank to the die coater. The conveyor may include at least one conduit for fluid communication between the die coater and the stationary tank.

According to the present disclosure, the assembly further includes a exit member. It is preferred that the exit member is a stationary component of the assembly. The exit member is configured to selectively close or open an exit aperture for ejecting the active material from the assembly. A system for extracting active material residue from the assembly is releasaly attachable or attached to the exit member, in particular the system described above. In particular, the system includes a conduit releasably connectable to the assembly. A conduit of the system may preferably be connectable to the exit aperture of the assembly.

In an embodiment of the assembly, the exit member has a closed state and an opened state. Preferably, the exit member is configured to selectively close or open the exit aperture according to the opened or closed state of the exit member. In the closed state of the exit member, active material is free to flow from the stationary tank to the die coater. Furthermore, in the closed state, the active material is inhibited from leaving the assembly through the exit aperture, In the opened state, the exit aperture is in fluid communication with the stationary tank such that the active material is enabled to leave the assembly through the exit aperture. In particular, in the opened state, the stationary tank may be in fluid communication with the system, preferably the mobile tank thereof, through the open exit aperture, while the sytem is attached to the assembly.

According to a further development of the assembly, the exit member is configured such that the active material is inhibited from traveling from the stationary tank to the die coater in the opened state. In the closed state of the exit member, the exit member may realize a separation between the stationary tank and/or the exit aperture and the die coater. It may be preferred that, in the closed state of the exit member, the exit member realizes a fluid-tight and/or air-tight barrier between on the one hand the stationary tank and on the other hand a scale and/ mixer of the assembly. Additionally or alternatively, in the closed state of the exit member, the exit member realizes a fluid-tight and/or air-tight barrier between on the one hand the exit aperture and on the other hand a scale and/ mixer of the assembly.

In a preferred embodiment of an assembly, which may be combined with the above-mentioned embodiments and further development, the exit member comprises a T-piece. In particular, the exit member may comprise a branch T valve and/or 3-way-stopcock.

In an embodiment of the assembly that may be combined with the previously described embodiments and further developments, the exit member is arranged below the stationary tank, such that the extraction of active material from the assembly to the system may be assisted by gravity.

Additionally or alternatively, some embodiments of the assembly further include a hopper attached to the stationary tank and arranged at the bottom of the stationary tank. It may be preferred that the stationary tank is provided with the hopper to improve the flow of active material from the stationary tank through the conveyor to the die coater. The exit member is arranged below the hopper. Thus, the extraction of active material from the stationary tank to the system may be, additionally or alternatively, assisted by the hopper.

The assembly may include a scale for measuring and/or dosing active material. Alternatively or additionally, the assembly may include a mixer configured to combine an active material with other components, particularly liquid components, for forming a slurry. The scale and/or the mixer is arranged between the stationary tank and the die coater. It may be preferred that the scale is arranged upstream from the mixer. The exit member is arranged upstream of the scale and/or the mixer. The conveyor may be separated by the mixer into a powder conveyor section and a slurry conveyor section, wherein the exit member is preferably arranged in the powder conveyor section.

The present disclosure also relates to a method for extracting active material residue from an assembly for coating an electrode with an active material layer, in particular using a system and/or assembly as described above. It may be preferred that the method is performed to extract active material residue from a first assembly and to subsequently inject the active material residue into another assembly, or to reintroduce the active material residue into the first assembly.

An assembly for coating an electrode with an active material layer may comprise a stationary tank, in which active material may be stored for processing, a conveyor configured to transfer in the active material (powder) through the assembly, a scale or other dosage device for measuring the amount of active material to be processed for coating, a mixer configured to combine an active material powder together with other components, particularly liquid components, for forming a slurry. The other components may in particular include a binder, a conductive material and/or a solvent. An assembly for coating an active material layer onto an electrode comprises at least one die coater in which the active material slurry, which may have been prepared in the mixer, is supplied onto an electrode in the shape of an electrode web so as to form an active material layer thereon.

The assembly may, additionally or alternatively, comprise one or more conveyors for the active material, in particular for the active material powder and/or for the active material slurry. The conveyor of the assembly for coating an electrode with an active material layer may include a vacuum conveyor. It shall be clear that the pumping device, in particular, the vacuum conveyor, of the system according to the present disclosure is preferably a unit separate from the conveyor of the assembly. Preferably, in case the system according to the present disclosure is connected to an assembly, the combination of the system and the assembly may include two different vacuum conveyors, one realizing the pumping device of the system, the other one being a conveyor of the assembly operable for normal coating operation. Alternatively, in case of the assembly is prepared for connection with the system according to the present disclosure by separating two or more subsystems from the assembly, the system including its pumping device, which may be a vacuum conveyor, may be connected to a first subsystem of the assembly, and the second subsystem of the assembly comprises the vacuum conveyor of the assembly, which is different from the pumping device to the system.

The method for extracting active material residue from an assembly for coating an electrode with an active material, preferably from an assembly as described above, comprises the steps of providing a mobile tank, attaching a conduit to the mobile tank, connecting the conduit to the assembly, and sucking active material residue from the assembly through the conduit into the mobile tank.

In the method for extracting active material residue, it may be preferred that the conduit is first attached to the mobile tank. It may be attached to the mobile tank in a permanent manner, for example by welding. Connecting the conduit to the assembly is preferably performed after attaching the conduit to the mobile tank. It may be preferred to connect the conduit to the assembly in a removable manner.

Sucking the active material residue from the assembly is performed after the conduit has been attached to the mobile tank and connected to the assembly, preferably an exit aperture thereof. Prior to sucking active material it is conceivable to test if the fluid system including the mobile tank, the conduit in the assembly and/or a subsystem thereof from which active material residue shall be extracted, are closed in an airtight manner such that the transfer medium, such as air, nitrogen or the like, which is used for setting the active material residue from the assembly does not leak. In case ambient air is used as the transport medium, it may be suitable to, preferably controllably, open at least one aperture, such as air inlet, of the assembly, or a subsystem thereof from which active material residue shall be extracted, before commencing to suck the active material residue out of the assembly.

In an embodment of the the method for extractive active material residue, a step may be provided comprising opening a selectively closeable exit member of the assembly to allow active material residue from the assembly to travel to the mobile tank through an exit aperture of the exit member. The exit member may be operated to switch between at least a closed state, in which active material residue is inhibited from travelling through the exit aperture from the stationary tank to the mobile tank, and an opened state, in which active material residue may travel through the exit aperture from the stationary tank to the mobile tank.

In a preferred embodiment of a method for extracting active material residue, a further step comprises discharging active material residue from the mobile tank to a storage container. Prior to discharging active material residue from the tank to a container, it is possible to releasably connect the storage container to the mobile tank, in particular in an airtight manner. Discharging the active material residue from the mobile tank to the storage container may be assisted by discharging the material through downward facing a funnel section of the mobile tank into the storage container. Alternatively or additionally, the mobile tank can be provided with a vibrator and/or a flow diger configured to facilitate discharging the active material residue from the mobile tank. It may be preferred to operate flow diger and/or vibrator associated with the stationary tank, in particular, intermittedly or continuously, while discharging active material residue from the mobile tank to the storage container. In some preferred embodiments, the discharge valve may be provided to the mobile tank. It may be preferred to operate the discharge valve to start and/or stop discharging active material from the mobile tank to the storage container. In a preferred embodiment, active material residue may be discharged from the mobile tank to the storage container through the discharge valve.

In a particularly preferred embodiment of the method for extracting active material residue from an assembly for coating an electrode, which may be combined with the aforementioned one, connecting the conduit to the assembly comprises connecting the conduit directly to one of the stationary tank, a hopper, a scale, a mixer, and/or a die coater of the assembly, in particular directly to the hopper.

The present disclosure furthermore relates to a method for manufacturing an electrode in an assembly for coating the electrode with an active material layer using a mixture of active material and active material residue. For ease of intelligibility, the mixture may be referred to as a mixture of the first active material and a second active material. In the method according to the present disclosure, the second active material consists of active material residue. The mixture of the first of the second active material may be created before, during or after mixing a first and/or the second active material with fluid components, which may in particular include a binder and/or a solvent, within a mixer of the assembly. In some embodiments, the mixing of the first and second active material may be performed as dry mixing of a first active material powder and a second active material powder. Dry mixing of the first and second active material powder may be performed inside of the assembly, for instance inside of the stationary tank, the hopper and/or the conveyor of the assembly. According to yet another embodiment of the method, dry mixing of active material powder may be performed before introducing the mixture of the first and the second active material powder into the assembly, in particular, the stationary tank and/or hopper of the assembly. It may be preferred that the first active material (powder) is different from the second active material (powder). The first active material may include a first marker to distinguish the first active material from the second active material. Alternatively or additionally, the second active material may include a marker, particularly a second marker, preferably to distinguish of the second active material from the first active material. It may be preferred that both the first active material and the second active material include a respective first and second marker. In some preferred embodiments, only the second active material (the extracted active material residue) includes a marker.

Preferably, the method for manufacturing an electrode uses the above-mentioned method for extracting active material residue providing of the active material residue. Preferably, the active material residue is extracted from of the same or from a different assembly in relation to the one used for the method for manufacturing an electrode.

In a further development of a method for manufacturing an electrode comprises a preparation of the mixture comprising 0.01 % to 25 wt % of the active material residue. In particular, the preparation may yield a mixture comprising 0.1 wt % to 10 wt % of the active material residue. As stated before, it may be preferred that the mixture is a powder mixture comprising the active material powder (first active material powder) and the active material residue powder (second active material powder), wherein the content of the active material residue may be determined in comparison to the total weight of the powder mixture. In case of a wet active material mixture including a liquid component such as solvent, binder the or the like, the content of the second active material may be determined with respect to the overall dry content of the wet mixture.

In the method for manufacturing an electrode, the content of the active material residue in the mixture may be constant for the duration of the coating operation. In a preferred embodiment of a method for manufacturing an electrode in an assembly for coating the electrode with the active material using a mixture of active material and active material residue, it may be preferred to decrease the active material residue content. In particular, the active material residue content may decrease from an initial value of about 10 wt %, in particular above 20 wt %, to a secondary active material residue content of below 10 wt %, in particular below 5 wt %. In the method for manufacturing an electrode, the active material residue content may be decreased to a final active material residue content below 1%, in particular below 0.1 %, preferably below 0.01 % by weight (wt %).

The present disclosure furthermore relates to a method for manufacturing a battery using a mixture of active material and active material residue. The battery may for example be a pouch type battery or a jelly-roll type battery. The battery may include a stacked or wound up, in particular rolled up, electrode assembly including a positive electrode, which may comprise the active material residue the negative electrode, which may comprise a second active material residue, and a separator between the positive electrode and the negative electrode.

The present disclosure also relates to an electrode comprising a sheet electrode and an active material layer coated on the sheet electrode, wherein the active material layer includes a mixture of an active material and an active material residue.

Additionally, the present disclosure relates to a battery comprising an electrode as described hereinabove.

### Battery

Batteries generally include two electrodes of opposite polarity, namely an anode and a cathode. The electrodes are arranged within a mutual container alongside a separator. The separator divides the container such that the anode and the cathode do not come into immediate contact with one another so as to avoid a short circuit. Furthermore, the mutual container is filled with an electrolyte solution, which allows ions to pass from the cathode to the anode, to allow for a chemical reaction to release electrical energy. The electrodes of the battery may each comprise a respective foil. The foil may comprise or consist of an electrically conductive material. In particular, the foil may consist of or comprise a metal, or a metal alloy, comprising or consisting for example of aluminum or copper. It may be preferred that at least one electrode of the battery is realized as a foil coated with an active electrode material (short: active material).

For example, an electrode configured to act as an anode may be provided with an active material layer configured for receiving and/or storing, preferably releasably storing, ions. An active material, in particular of an anode, may include graphite as its main component. An electrode configured to act as a cathode may be equipped with an active material configured to release ions. The active material, in particular for a cathode, may comprise or consist of metal oxide, such as a lithium oxide. The active material may for example include or consist of LCO (LiCoO₂), NCM (Li(NiCoMn)O₂), NCA (Li(NiCoAl)O₂), LMO (LiMn₂O) and/or LFP (LiFePO₄). An active material slurry or layer include conductive additives, binder, filler and other components. An active cathode material may be configured to be replenishable. The process of releasing ions from the cathode active material and received of ions by the anode active material may be referred to as discharging. A process of releasing ions from an anode active material and replenishing the cathode active material with the ion may commonly be referred to as charging or recharging. The active materials used in the electrodes of a battery are considered essential for determining properties of a battery such as its capacity, voltage and memory effect.

In the present disclosure, a positive electrode active material coated on a positive electrode sheet and a negative electrode active material coated on a negative electrode sheet may include any known active material in the technical field pertaining to the present disclosure without limitation. An electrode sheet may be made by severing a section from an electrode web.

The term "web material" shall be understood as a generic term to relate to a web-type material such as a film, sheet, foil, net, porous material, such as sieve, foam, and non-woven fabric, or the like. A web material has a web length dimension substantially larger than a web width dimension, wherein the latter is substantially larger than a web thickness dimension. For example, the web thickness dimension of the metal foil web material to be processed may be configured in a range between 1 µm and 100 µm, preferably between 3 µm and 30 µm, more preferably between 5 µm and 15 µm. For example, the web width dimension of the metal foil web material to be processed may be configured in a range between 1 mm and 5000 mm, preferably between 10 mm and 1000 mm, more preferably between 50 mm and 500 mm. For example, the web length dimension of the metal foil web material to be processed may be configured in a range between 10 m and 100 km, preferably between 100 m and 50 km, more preferably between 500 m and 25 km. At a typical rate of web material movement during processing, particularly during the coating step, may be in the order of magnitude of 100 m/Min.

### Positive Electrode

A positive electrode preferably includes an active material powder, particularly a positive electrode active material powder. Specifically, the positive electrode includes a positive electrode current collector and a positive electrode active material layer formed on the positive electrode current collector, and the positive electrode active material layer includes the positive electrode active material powder.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0. 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² prefarbly includes at least one element having an average tetravalent oxidation state; 0 ≤ x ≤ 1) disclosed by US6,677,082 and US6,680.143.

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally including F; 0 < a ≤ 2, 0 ≤ x ≤ 1, 0 ≤ y < 1, 0 ≤ z < 1; the stoichiometric coefficients a, x, y and z are selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used as the negative electrode active material. The carbon material may include low crystalline carbon and high crystalline carbon.

The positive electrode current collector may include a highly conductive metal and is not particularly limited as long as the positive electrode active material layer is easily adhered thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. Also, the positive electrode current collector may typically have a thickness of 3 µm to 500 µm and have fine irregularities formed on the surface thereof to increase the adhesion of the positive electrode active material. For example, the positive electrode current collector may be used in any of various forms such as a film, a sheet, a foil, a net, a porous material, a foam, a non-woven fabric, and the like.

In this case, the positive electrode active material powder may be included in an amount of 80 to 99 wt %, more specifically, 85 to 98.5 wt % with respect to the total weight of the positive electrode active material layer. When the positive electrode active material powder is included in the above-described amount, excellent capacity characteristics can be exhibited.

The conductive material is used to impart conductivity to the electrode, and any conductive material that does not cause a chemical change in a battery and has conductivity may be used without particular limitation. Specific examples thereof include graphite such as natural graphite and artificial graphite; carbon-based materials such as carbon black, acetylene black, Ketjen black, channel black, furnace black, lamp black, thermal black, carbon fiber, and the like; powders or fibers of metals such as copper, nickel, aluminum, silver, and the like; conductive tubes such as carbon nanotubes and the like; conductive whiskers such as zinc oxide, potassium titanate, and the like; conductive metal oxides such as titanium oxide and the like; and conductive polymers such as polyphenylene derivatives and the like, which may be used alone or in combination of two or more thereof. The conductive material may be included in an amount of 0.1 to 15 wt % with respect to the total weight of the positive electrode active material layer.

The binder serves to enhance the cohesion between positive electrode active material particles and the adhesion between the positive electrode active material and the current collector. Specific examples thereof include polyvinylidene fluoride (PVDF), a polyvinylidene fluoride-hexafluoropropylene copolymer (PVDF-co-HFP), polyvinyl alcohol, polyacrylonitrile, polymethyl methacrylate, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber (SBR), fluoro-rubber, polyacrylic acid, polymers in which hydrogens thereof have been substituted with Li, Na, or Ca, and various copolymers thereof, which may be used alone or in combination of two or more thereof. The binder may be included in an amount of 0.1 to 15 wt % with respect to the total weight of the positive electrode active material layer.

The positive electrode may be manufactured by a typical method of manufacturing a positive electrode, wherein the positive electrode active material powder is used. Specifically, the positive electrode may be manufactured by applying, onto a positive electrode current collector, a positive electrode slurry composition prepared by dissolving or dispersing the positive electrode active material powder and, optionally, a binder, a conductive material, and a dispersant in a solvent and drying and roll-pressing the same.

The solvent may be a solvent generally used in the art, and examples thereof include dimethyl sulfoxide (DMSO), isopropyl alcohol, N-methyl pyrrolidone (NMP), dimethyl formamide (DMF), acetone, water, and the like, which may be used alone or in combination of two or more thereof. The usage amount of the solvent is sufficient as long as it is able to dissolve and disperse the positive electrode active material, conductive material, binder, and dispersant considering the thickness of an applied slurry and manufacturing yield and allows a viscosity capable of exhibiting excellent thickness uniformity when applied to manufacture a positive electrode.

### Negative Electrode

A negative electrode preferably includes an active material powder, particularly a negative electrode active material powder. Specifically, the negative electrode includes a negative electrode current collector and a negative electrode active material layer formed on the negative electrode current collector, and the negative electrode active material layer includes the negative electrode active material powder.

In a battery, in particular a lithium secondary battery, the negative electrode includes a negative electrode current collector and a negative electrode active material layer positioned on the negative electrode current collector.

The negative electrode current collector is not particularly limited as long as it does not cause a chemical change in a battery and has high conductivity. For example, copper, stainless steel, aluminum, nickel, titanium, thermally treated carbon, copper or stainless steel whose surface has been treated with carbon, nickel, titanium, silver, or the like, an aluminum-cadmium alloy, or the like may be used. Also, the negative electrode current collector may typically have a thickness of 3 µm to 500 µm. Also, like the positive electrode current collector, the negative electrode current collector may have fine irregularities formed on the surface thereof to increase the adhesion of a negative electrode active material. For example, the negative electrode current collector may be used in any of various forms such as a film, a sheet, a foil, a net, a porous material, a foam, a non-woven fabric, and the like.

The negative electrode active material layer includes a negative electrode active material and, optionally, a binder and a conductive material.

As the negative electrode active material, a compound that enables the reversible intercalation and deintercalation of lithium may be used. Specific examples thereof include: carbonaceous materials such as artificial graphite, natural graphite, graphitized carbon fiber, amorphous carbon, and the like; metallic compounds capable of alloying with lithium, such as Si, Al, Sn, Pb, Zn, Bi, In, Mg, Ga, Cd, a Si alloy, a Sn alloy, an Al alloy, and the like; metal oxides capable of doping and dedoping lithium, such as SiOß (0<ß<2), SnO2, vanadium oxide, and lithium vanadium oxide; and composites including the metallic compound and the carbonaceous material, such as a Si-C composite and a Sn-C composite, which may be used alone or in combination of two or more thereof. In addition, a lithium metal thin film may be used as the negative electrode active material. Additionally, as a carbon material, both low-crystallinity carbon and high-crystallinity carbon may be used. Representative examples of the low-crystallinity carbon include soft carbon and hard carbon, and representative examples of the high-crystallinity carbon include amorphous, platy, flaky, spherical or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch-derived cokes, and the like.

The negative electrode active material may be included in an amount of 80 wt % to 99 wt % with respect to the total weight of the negative electrode active material layer.

The binder serves to assist bonding between the conductive material, the active material, and the current collector and is typically included in an amount of 0.1 wt % to 10 wt % with respect to the total weight of the negative electrode active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber, nitrile butadiene rubber, fluorine rubber, and various copolymers thereof.

The conductive material is a component for enhancing the conductivity of the negative electrode active material and may be included in an amount of 10 wt % or less, and preferably, 5 wt % or less with respect to the total weight of the negative electrode active material layer. Such a conductive material is not particularly limited as long as it does not cause a chemical change in a battery and has conductivity. For example, graphite such as natural graphite, artificial graphite, or the like; carbon black such as acetylene black, Ketjen black, channel black, furnace black, lamp black, thermal black, or the like; a conductive fiber such as a carbon fiber, a metal fiber, or the like; carbon fluoride; a metal powder containing aluminum, nickel, or the like; a conductive whisker such as zinc oxide, potassium titanate, or the like; a conductive metal oxide such as titanium oxide or the like; or a conductive material such as a polyphenylene derivative or the like may be used.

The negative electrode may be manufactured by a typical method of manufacturing a negative electrode, wherein the negative electrode active material powder is used. Specifically, the negative electrode may be manufactured by applying, onto a negative electrode current collector, a negative electrode slurry composition prepared by dissolving or dispersing the negative electrode active material powder and, optionally, a binder, a conductive material, and a dispersant in a solvent and drying and roll-pressing the same.

The negative electrode active material layer may be formed by applying, onto a negative electrode current collector, a negative electrode slurry composition prepared by dissolving or dispersing a negative electrode active material and, optionally, a binder and a conductive material in a solvent and drying the same, or by laminating, on a negative electrode current collector, a film obtained by casting the negative electrode slurry composition on a separate support and removing it from the support.

### Active Material Powder

An active material powder may include active material powder comprising a metal oxide, for example including a lithium composite transition metal oxide, in the form of a single particle consisting of one nodule and/or a pseudo-single particle which is a composite of 30 or less nodules, preferably 2 to 20 nodules, and more preferably 2 to 10 nodules. Since the active material powder comprising a metal oxide, for example including a lithium composite transition metal oxide, in the form of a single particle and/or a pseudo-single particle has higher particle strength than a conventional lithium composite transition metal oxide in the form of a secondary particle in which several tens to several hundreds of primary particles are agglomerated, particles are less broken in rolling.

In addition, since the active material powder comprising a metal oxide, for example including a lithium composite transition metal oxide, in the form of a single particle or a pseudo-single particle has a small number of sub-parts (i.e. nodules) constituting the single particles and/or pseudo-single particles, changes resulting from the volume expansion/contraction of the sub-parts (i.e. nodules) during charging and discharging are small, and accordingly, the generation of cracks inside the particles is substantially reduced.

In the present disclosure, "single particle" is a particle consisting of a single nodule. In the present disclosure, a "pseudo-single particle" refers to a particle which is a composite formed of 30 or less nodules. A "nodule" according to the present disclosure refers to particle unit body constituting a single particle and a pseudo-single particle. The nodule may be a single crystal lacking any crystalline grain boundary, or alternatively that may be a polycrystal in which grain boundaries do not appear when observed in a field of view of 5000× to 20000× using a scanning electron microscope (SEM).

In the present disclosure, a "secondary particle" refers to a particle formed by agglomeration of a plurality several tens to several hundreds of primary particles. More specifically, a secondary particle is an agglomerate of 50 primary particles or more.

In the present disclosure, when a "particle" is described, any one or all of a single particle, a pseudo-single crystal, a primary particle, a nodule, and a secondary particle may be encompassed.

In the present disclosure,"Dₘₑₐₙ" refers to the average particle diameter of the nodules as measured using an electron backscatter diffraction (EBSD) pattern analyzer. EBSD analysis is conducted by manufacturing an electrode using a positive electrode active material powder to be measured, cutting the electrode through ion milling (HITACHI IM-500. accelerating voltage: 6 kV) before a rolling process to obtain a cross section, and measuring the cross section using a FE-SEM device (JEOL JSM-7900F). In this case, the measurement is made under the condition of an accelerating voltage of 15 kV and a W.D. of 15 mm on a scale (130) of about 400±10 primary particles. The active material powder may include nodules having an mean particle diameter (Dₘₑₐₙ) of 0.5 to 3.5 µm. Specifically, the Dₘₑₐₙ may be 0.5 µm or more, 1.0 µm or more, or 1.5 µm or more, and the Dₘₑₐₙ may be 3.5 µm or less, 3 µm or less, 2.5 µm or less, or 2.0 µm or less. When the average particle diameter (Dₘₑₐₙ) of the nodules is less than 0.5 µm, the specific surface area of the entire positive electrode active material is increased, and thus a side reaction with an electrolyte may be increased. On the other hand, when the Dₘₑₐₙ exceeds 3.5 µm, (lithium) mobility in the positive electrode active material is decreased, and thus the output characteristics of a battery may be degraded.

In the present disclosure, "D₅₀" refers to a particle size corresponding to a cumulative volume of 50% in the particle size distribution of an active material powder. The average particle diameter (D₅₀) may be measured by a laser diffraction method. For example, the average particle diameter may be measured by dispersing a positive electrode active material powder in a dispersion medium, inputting the resultant into a commercially available laser.

The active material powder may have a D₅₀. which is a value corresponding to a cumulative volume of 50% in the particle size distribution of the powder, of 2 to 10 µm. Specifically, the D₅₀ may be 2 µm or more, 3 µm or more, 4 µm or more, 5 µm or more, or 6 µm or more and the D₅₀ may be 10 µm or less, 9 µm or less, 8 µm or less, or 7 µm or less. When the D₅₀ is less than 2 µm, the specific surface area of the entire positive electrode active material is increased, and thus a side reaction with an electrolyte may be increased. On the other hand, when the D₅₀ exceeds 10 µm, lithium mobility in the positive electrode active material is decreased, and thus the output characteristics of a battery may be degraded.

The active material powder may include one or more markers. A marker may serve to distinguish between a first active material powder and a second active material powder. Particularly, a marker may serve to distinguish between a virgin active material powder and active material residue. One or more markers are preferably selected so as to not detrimentally affect the active material. It may be preferred that the active material powder, in particular the active material powder residue, contains between 0.01 wt % to 5 wt %, in particular between 0.02 wt % to 2 wt %, preferably between 0.05 wt % and 1 wt % of the marker. In some preferred embodiments, the the active material powder, in particular the active material powder residue, contains less than 1 wt%, in particular less than 0.5 wt %, preferably les than 0.2 wt % or less than 0.1 wt% of the marker. A positive marker may be provided to distinguish between different positive active material powders. A positive marker may preferably comprise or consist of a material foreign the positive electrode active material. A negative marker may be provided to distinguish between different negative active material powders. A negative marker may preferably comprise or consist of a material foreign to the negative electrode active material.

In some embodiments, the marker may comprise or consist of metal oxide, such as a lithium oxide, for LiCoO₂, Li(NiCoMn)O₂, Li(NiCoAl)O₂, LiMn₂O and/or LiFePO₄. Alternatively or additionally, a marker may in particular include or consist of one or more of the list comsisting of carbonaceous materials such as artificial graphite, natural graphite, graphitized carbon fiber, amorphous carbon, and the like; metallic compounds capable of alloying with lithium, such as Si, Al, Sn, Pb, Zn, Bi, In, Mg, Ga, Cd, a Si alloy, a Sn alloy, an Al alloy, and the like; metal oxides, such as SiO_{ß} (0<ß<2), SnO₂, vanadium oxide, and lithium vanadium oxide; and composites including the metallic compound and the carbonaceous material, such as a Si-C composite and a Sn-C composite, which may be used alone or in combination of two or more thereof.

However, the problem to be solved by the embodiments of the present disclosure is not limited to the above-described problems, and can be variously expanded within the scope of the technical idea included in the present disclosure.

### ADVANTAGEOUS EFFECTS

According to the embodiments, a system and method for extracting an active material residue from an assembly for coating an electrode (web) with an active material layer can be provided allowing for saving and reusing active material so as to operate the assembly in an economically and ecologically improved manner. According to the embodiments, the economical and ecological advantages may me used in a battery, an electrode and a method for manufacturing an electrode using a mixture of (virgin) active material and active material residue.

The effects of the present disclosure are not limited to the effects mentioned above and additional other effects not described above will be clearly understood from the description of the appended claims by those skilled in the art.

### BRIEF DESCRIPTION OF THE DRAWINGS

- FIG. 1: is a schematic illustration of an assembly for coating an electrode with an active material layer;
- FIG. 2: is a schematic illustration of a system for extracting active material residue from an assembly connected to a subsystem thereof;
- FIG. 3: is a is a schematic illustration of a system for extracting active material residue from an assembly; and
- FIG. 4: is a is another schematic illustration of a system for extracting active material residue.

### DETAILED DESCRIPTION OF THE EMBODIMENTS

Hereinafter, various embodiments of the present disclosure will be described in detail with reference to the accompanying drawings so that those skilled in the art can easily carry them out. The present disclosure can be modified in various different ways, and is not limited to the embodiments set forth herein.

Portions that are irrelevant to the description will be omitted to clearly describe the present disclosure, and like reference numerals designate like elements throughout the description. The marker is preferably different from main component of the active material powder. The marker may preferably be introduced into extracted active material residue in the system, particularly in the mobile tank, or in the storage container. In some embodiments, the marker may be formed in the active material residue during extraction from an assembly and/or during storage in the mobile tank and/or in the storage container. In some embodiments, the marker may be added to the active material during a preparation of the active material prior to extraction of the active material from an assembly as active material residue.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "higher than", "on" or "above" another part, the case where it is described as being located "lower than"."below" or "under" another part will also be understood with reference to the above-mentioned contents.

Further, throughout the description, when referred to as "planar", it means when a target portion is viewed from the upper side, and when referred to as "cross-sectional", it means when a target portion is viewed from the side of a cross section cut vertically.

Throughout the description, when a portion is referred to as "including" or "comprising" a certain component, it means that the portion can further include other components, without excluding the other components, unless otherwise stated. Throughout the specification, unless stated otherwise, each element may be singular or plural.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

Hereinafter, a system and a method for extracting active material residue as well as a method of coating an electrode with an active material layer for manufacturing a battery and a corresponding assembly are described with reference to the accompanying drawings.

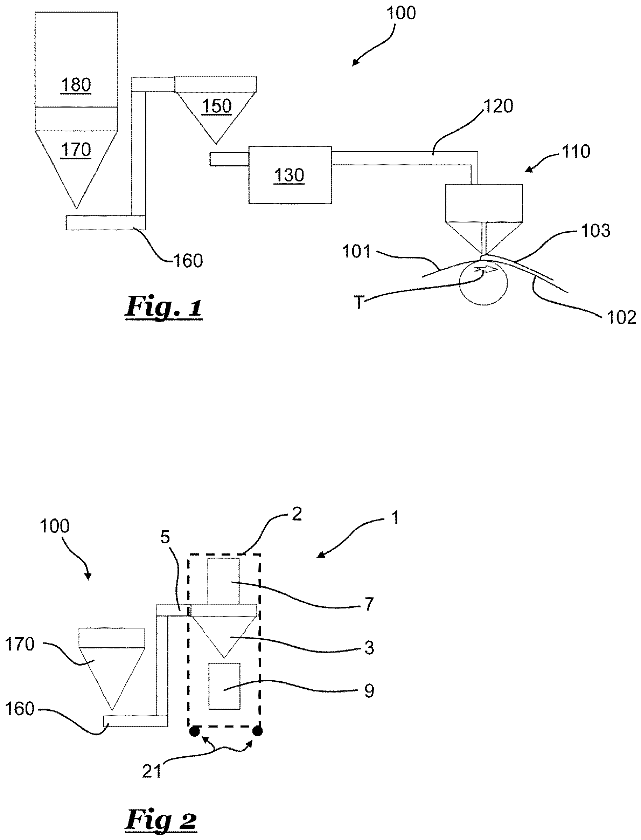

For illustrative purposes, an assembly 100 is shown in FIG. 1 which is configured to perform a process of processing metal foil web material 101 into an electrode web 102. In other words, FIG.1 shows the normal coating operation mode of the assembly 100. The metal foil web material 101 typically has a thickness of only a few µm, a width of several dm and a length which may reach one or more km. The metal foil web material 101 is provided from a supply and transported through the assembly 100 in accordance with the transport direction T indicated with arrows. The metal foil web material 101 is run through a die coater 110 which is configured and operated to supply the metal foil web material with an active material layer 103, thus forming an electrode or electrode web 102. Downstream of the die coater 110. an oven may be provided for curing the active material layer 103 to stabilize the electrode web 102 (not shown).

In the schematic illustration of the assembly 100 shown in Fig. 1, only one die coater 110 is shown, coating only a first side of the metal foil web material 101. It may be preferred that the metal foil web material 101 is afterwards fed through a second die coater for coating the opposite, second side of the metal foil web material so as to produce an electrode web supplied with an active material layer on both sides of the metal foil web material (not shown). Downstream of the die 110 or dies, one or more separation devices may be provided for cutting individual sheets from the electrode web 102 (not shown). Such separation devices may be operated to produce individual electrode sheets to be used in batteries.

The assembly 100 includes a conveyor 120 for an active material slurry prepared in a mixer 130. The conveyor 120 brings the active material slurry from the mixer 130 to the die coater 110 where the slurry is dispensed onto the metal foil web material 101 to create the active material layer 103 coating the electrode 102. The mixer 130 is supplied with a predetermined amount of active material powder by a check scale 150 or other dosage device. The mixer 130 may furthermore include one or more ports 140 for additional materials to be included into the active material slurry. A port 140 may be provided to introduce active material residue extracted from another assembly. A port 140 may be provide to introduce one or more liquid components, such as a binder or a solvent.

A conveyor 160 which may be a vacuum conveyor, is provided between a hopper 170 and the scale 150. The hopper 170 may contain active material powder, or a dry mixture of active material powder and active material residue powder. The hopper 170 may realize or be combined with a stationary tank 180 for active material powder, or a dry mixture of active material powder and active material residue powder.

The assembly 100 may include T-shaped valve (not shown). The T-shaped valve may be arranged in the conveyor 160 between the stationary tank 180 and the die coater 110. Preferably, the T-shaped valve may be arranged below the stationary tank 180, in particular at the lower end of the hopper 170 provided to the stationary tank 180. The T-shaped valve may have an exit aperture to which the conduit is attachable. The T-shaped valve may be operable to either close the exit aperture and provide a connection between the stationary tank 180 and the die coater 110 through the conveyor 160, or to open the exit aperture such that active material residue may be extracted out of the assembly 100, particularly the stationary tank 180, through the exit aperture.

FIG. 2 illustrates a system 1 for extracting active material residue from an assembly combined with a subsystem of the assembly 100 including the hopper 170 and the conveyor 160 attached to the hopper. When the system 1 is attached to the assembly 100. the assembly is in an extraction mode in which any active material (powder) residue may be removed from the assembly 100 or a subassembly thereof using the system 1.

The system 1 shown in FIG. 2 includes a mobile tank 3, a conduit 5, and a pumping device 7. The conduit 5 is attached to the mobile tank 3 and connected to the hopper 170 via the conveyor 160 of the assembly 100. The pumping device 7 is firmly attached to the mobile tank 3. The pumping device 7 of the system 1 is operable to create a negative pressure for sucking active material residue out of the assembly 100. particularly the subsystem or subassembly thereof including the hopper 170. As indicated in FIG. 2, the system 1 may include a storage container 9, which may be a reused delivery bag which may have previously been used for providing raw active material powder to the assembly 100. The storage container 9 may be connected to the mobile tank 3 to receive active material residue extracted by the system 1.

The system 1 may include a carriage or rack 2 comprising rollers or wheels 21 provided to render the system 2 including its mobile tank 3 moveable to and from one or more assemblies 1 in a manufacturing site. The mobile tank 3 is rigidly attached to the rack 2. The pumping device 7 is rigidly attached to the rack 2 and/or the mobile tank 3. The conduit 5 is attachable or, preferably, attached to the mobile tank 3 and thus to the rack 2. A pneumatic supply line 4 may be mounted to the rack 2.

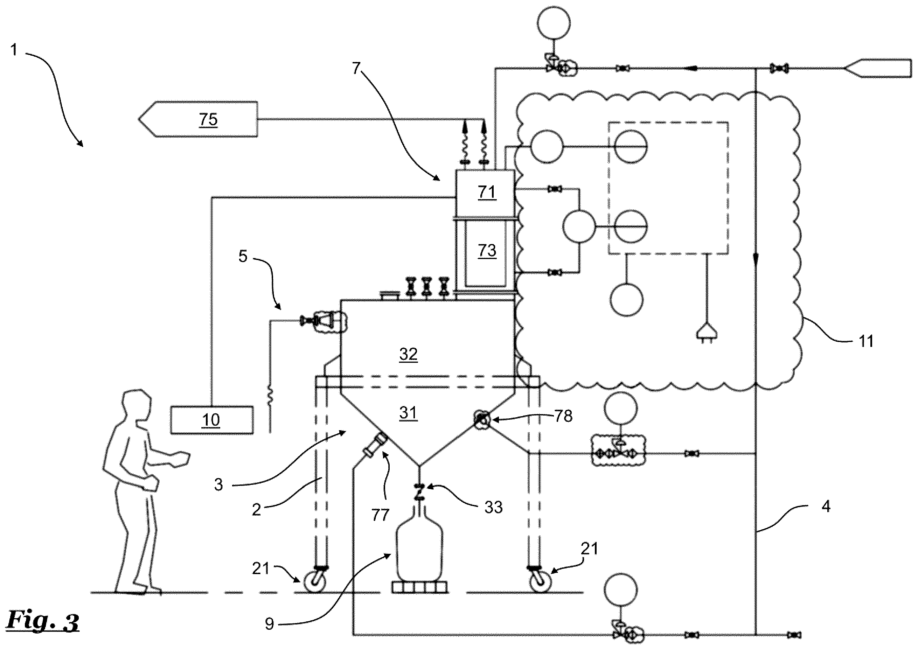

FIG. 3 shows an exemplary embodiment of a system 1 for extracting active material residue. The mobile tank 3 includes a downward tapering funnel section 31 and a cylinder section 32 directly above the funnel section 31 so as to provide a mobile tank 3 having a large volume. A lid 36 is arranged directly on top of the cylinder section 32. The conduit 5 is attached to the mobile tank 3. The attachment of the conduit 5 to the mobile tank 3 is arranged below the lid 36. The attachment of the conduit 5 to the mobile tank 3 is in a circumferential wall of the cylinder section 32. The conduit 5 may be a flexible hose.

A control valve 35 is provided at the junction of the conduit 5 to the mobile tank 3. The control valve 35 is operable to be closed to seal of the mobile tank 3 from the conduit 5 and an assembly 100 attachable thereto. The control valve 35 is operable to be opened for establishing a fluid connection between the mobile tank 3 and the conduit 5, in particular for establishing a fluid connection of the system 1 to an assembly for coating an electrode with an active material layer.

The system 1 may be provided with a pneumatic supply line 4 for powering and/or controlling one or more component of the system, for example the pumping device 7. One or more components of the system 1, for example a control valve 35, a discharge valve 33, a vibrator 77, a flow diger 78 may be connected to the pneumatic supply line 4.

The system 1 is provided with a storage container 9 releasably attachable to the mobile tank 3. The storage container 9 can be attached to the bottom of the mobile tank 3 to receive active material residue from the mobile tank 3 using the force of gravity. In order to enhance the dispensing of active material residue from the mobile tank 3 into the storage container, a vibrator 77 and/or a flow diger 78 may be provided. During the extraction mode the vibrator 77 and/or flow diger 78 may be turned off. The vibrator 77 and/or the flow diger 78 may each include a respective drive, in particular a pneumatic drive powered through a pneumatic supply line 4 of the assembly.

The funnel section 31 of the mobile tank 3 tapers towards a dispensing opening to which the storage container 9 is attached. The storage container 9 may be sealingly attached to the mobile tank 3, for example using a cuff 39, to avoid spilling active material residue during dispensing. The mobile tank 3 has a discharge valve 33 arranged at the dispensing aperture. The discharge valve can be shut, for example for allowing the the storage container 9 to be removed or replaced, and/or to sealingly close the mobile tank 3 during the extraction mode.

The puming device 7 is firmly attached to the top of the mobile tank 3. The pumping device 7 is attached to the lid 36. In the presenty illustrated embodiment, the pumping device 7 includes a vacuum conveyor 71 which uses a vacuum pump. A filter 73 is arranged between the mobile tank 3 and the vacuum conveyor 71 to protect the vacuum device 7 from active material residue powder or other particles. The system, preferably the pumping device thereof, may further comprise a dust collector 75 arranged at an exhaust of the vacuum device to protect the envireonment from dust particles processed in the vacuum pump and the like.

The system 1 is provided with a control panel 10 with a user interface for interaction with an operator. The system 1 includes a control device 11 which is operatively coupled to one or more components of the system. The control device 11 may be coupled to the control panel 10 so that the system 1 can be switched on or off and optionally for controlling one or more operating parameters of the system, such as negative pressure, mass flow and/or volume flow of the pumping device 7. Alternatively or additionally, the control device 11 may be coupled to one or more sensors of the system 1, such as pressure sensors, for example sensors associated with the supply line 4, the vibrator 77, the flow diger 78 and/or the pumping device 7.

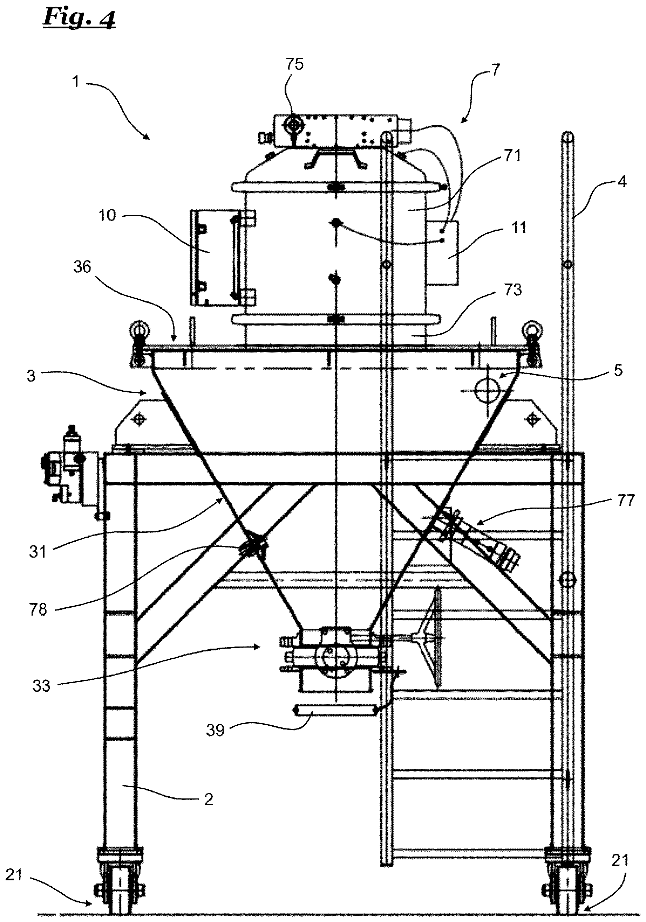

FIG. 4 shows another exemplary embodiment of a system 1 for extracting active material residue. The mobile tank 3 has a lid 36 directly on top of a funnel section 31.

### LIST OF REFERENCE NUMERALS

- 1: system
- 2: rack
- 3: mobile tank
- 4: pneumatic supply line
- 5: conduit
- 7: pumping device
- 9: storage container
- 10: control panel
- 11: control device
- 21: wheel
- 31: funnel section
- 32: cylinder section
- 33: discharge valve
- 35: control valve
- 36: lid
- 39: cuff
- 71: vacuum pump
- 73: filter
- 75: dust collector
- 77: vibrator
- 78: flow diger
- 100: assembly
- 101: metal foil web material
- 102: electrode
- 103: active material layer
- 110: die coater
- 120: conveyor
- 130: mixer
- 140: port
- 150: scale
- 160: conveyor
- 170: hopper
- 180: stationary tank

## Claims

1. A system (1) for extracting an active material residue from an assembly (100) for coating an electrode (102) with an active material layer (103), comprising:
a mobile tank (3) configured to hold the active material residue;
a conduit (5) attachable to the mobile tank (3) and releasably connectable to the assembly (100), and
a pumping device (7) configured to apply a negative pressure to the mobile tank (3) for sucking the active material residue from the assembly (100) through the conduit (5).

2. The system (1) of claim 1, wherein the pumping device (7) is arranged at the mobile tank (3).

3. The system (1) of claim 1 or 2, further comprising
a storage container (9) attachable to and detachable from the mobile tank (3) and configured to receive and store the active material residue.

4. The system (1) of one of the preceding claims, wherein the mobile tank (3)
comprises at funnel section (31) and/or a discharge valve (33) at the lower side of the mobile tank (3).

5. The system (1) of one of the preceding claims, wherein the mobile tank (3)
comprises a vibrator (77) and/or a flow diger (78) configured to facilitate discharging the active material residue from the mobile tank (3).

6. The system (1) of one of the preceding claims, further comprising a filter (73) between the pumping device (7) and the mobile tank (3).

7. The system (1) of one of the preceding claims, wherein the conduit (5) is configured to be connectable directly to a stationary tank (180), a hopper (170), a scale (150), a mixer (130) and/or a die coater of the assembly (100).

8. An assembly (100) for coating an electrode (102) with an active material layer (103), comprising
a stationary tank (180) configured to store a supply of active material for processing in the assembly (100),
a die coater (110) configured to supply the active material onto metal foil web material (101) for forming the active material layer (103);
a conveyor (120, 160) configured to transfer the active material from the stationary tank (180) to the die coater (110), and
an exit member configured to selectively close or open an exit aperture for ejecting the active material from the assembly (100), wherein a system (1) for extracting active material residue from the assembly (100) is releasaly attachable or attached to the exit member.

9. The assembly (100) of claim 8, wherein the exit member has
- a closed state in which active material is free to flow from the stationary tank (180) to the die coater (110) and in which the active material is inhibited from leaving the assembly through the exit aperture; and
- an opened state in which the exit aperture is in fluid communication with the stationary tank (180) such that the active material is enabled to leave the assembly (100) through the exit aperture.

10. The assembly (100) of one of the claims 8 or 9, wherein the exit member comprises a T-piece.

11. Method for extracting active material residue from an assembly (100) for coating an electrode (102) with an active material layer (103), comprising
- providing a mobile tank (3),
- attaching a conduit (5) to the mobile tank (3),
- connecting the conduit (5) to the assembly (100),
- sucking active material residue from the assembly (100) through the conduit (5) into the mobile tank (3).

12. The method of claim 11, further comprising opening a selectively closeable exit member of the assembly (100) to allow active material residue from the assembly to travel to the mobile tank (3) through an exit aperture of the exit member.

13. A method for manufacturing an electrode (102) in an assembly (100) for coating the electrode (102) with an active material layer (103) using a mixture of an active material and an active material residue.

14. The method of claim 13, comprising a preparation of the mixture comprising 0.01 wt-% to 25 wt-%, of the active material residue.

15. A method for manufacturing a battery using a mixture of active material and active material residue.
